# EUROPEAN PATENT SPECIFICATION

(11) **EP 0 590 093 B1**
(45) Date of publication and mention of the grant of the patent: **06.08.1997**
(21) Application number: 92921047.4
(22) Date of filing: 15.09.1992
(51) Int. Cl.: B23B 27/22, B23B 25/02, B23Q 11/00

(54) **CHIP-BREAKING TOOLHOLDER WITH ADJUSTABLE ORIFICE CAP**
SPAUBRECHWERKZEUGHALTER MIT REGELBAREM ÖFFNUNGSAUFSATZ
PORTE-OUTIL CASSANT LES COPEAUX ET TOURNURES AVEC CHAPEAU D'ORIFICE REGLABLE

(30) Priority: 25.09.1991 US 766499
(43) Date of publication of application: 06.04.1994
(73) Proprietor: KENNAMETAL INC., Latrobe, PA 15650 (US)
(72) Inventor: ARMBRUST, William, D., Cary, NC 27511 (US); DEEMER, Randall, E., Wake Forest, NC 27587 (US)
(74) Representative: Leiser, Gottfried, Dipl.-Ing.
(86) International application number: US9207819
(87) International publication number: WO9305913

(56) References cited:
- US-A- 3 230 802
- US-A- 3 323 195
- US-A- 3 795 454
- US-A- 4 848 198
- Modern Machine Shop, September 1991, "Bye Bye Birds' Nests", pp. 54-62.

## Description

### FIELD OF THE INVENTION

The present invention relates generally to machine toolholders for holding a cutting insert adapted to engage a workpiece and remove a chip therefrom, and more particularly to hydraulic chip-breaking toolholders which use a high velocity fluid stream to break the chip removed from the workpiece into small segments, as defined in the preamble of claim 1.

### BACKGROUND OF THE INVENTION

Metal work cutting tools generally include a disposable cutting insert and a toolholder adapted to firmly hold the cutting insert. The cutting insert is brought into contact with a metal workpiece while the workpiece is rotated to remove a chip from the workpiece. There is a tendency for removed chips to form long, continuous strands rather than break into small segments. These long strands spiral and cause hot metal liberated from the workpiece to remain in contact with the cutting insert for a longer duration and often tangle up with the workpiece or the toolholder. If the strand tangles up with the workpiece or the toolholder, the operation must be halted so that the strand may be manually broken. As most metal working operations are intended to operate nearly automatically, this is a very undesirable and expensive task. Furthermore, the life of a cutting insert, generally being formed from carbide steel or a similar metal, is heavily dependent upon operation temperature. Under normal conditions, the cutting insert is exposed to intense heat generated in cutting chips from the workpiece. This heat is significantly increased when hot metal chips remain in contact with the cutting insert for an extended duration as they do when the chips form continuous strands.

The need to break chips to avoid stranding is well understood and recognized in the metal working industry. A great deal of design and experimentation has been devoted to the development of efficient and effective means for breaking chips. For example, some inserts are designed with integrally formed chip-breakers. Such chip-breakers usually comprise an obstruction in the path of the chip for deflecting and curling the chip. By bending the chip to the limit of its ductility, the chip breaks into small segments.

Another method of chip-breaking is to direct a high velocity stream of coolant at the chip. The stream bends the chip and cools it, making it more brittle. This combination of effects causes the chips to break off into smaller segments rather than form long strands. The coolant also serves to cool the cutting insert thereby extending its operational life.

Methods have been developed for directing a high velocity fluid stream at the cutting insert which use an external fluid line attached to the toolholder. Often, several tools will be used to work on a single workpiece, necessitating changing of the toolholders. The additional steps of disconnecting and reconnecting the external fluid line significantly decrease the speed and efficiency of toolholder replacement.

A tool assembly disclosed in Patent No. 4,955,264, has been developed which obviates the need for an external fluid line. This tool assembly includes a coolant passage formed in the toolholder and a cap having a constricted outlet attached to the outlet of the passageway. While this apparatus solves the problem of conventional tool assemblies, it has a significant limitation. Often a single tool assembly may be used to make several different cuts on a workpiece. These different cuts may be at different depths, angles, and/or directions. As a result, different portions of the cutting insert contact the workpiece and the removed chips differ in character. For different cuts, it is desirable to alter the direction of the high velocity coolant stream to provide optimal flow across the insert and against the chip. In the described design, the direction of the coolant stream may only be altered by changing caps, each cap outlet having a particular angle of inclination to the cutting insert.

A coolant adapter for a toolholder is disclosed in United States Patent 3,323,195 that corresponds to the pre-characterizing part of claim 1. The coolant adapter is comprised of a fluid directing orifice which is rotatably adjustable within a cylinder fixed to a thin strip base mounted to a machine tool carriage along with a toolholder by set screws. The orifice is part of a cylindrical plug held in place within the cylinder by a threaded screw insert which also carries the coolant line. While the cylindrical plug may be rotatably adjusted by completely removing the screw insert and adjusting the plug as desired, such adjustment requires partial disassembly of the device.

Therefore, there is a need for conveniently and efficiently adjusting the direction of the high velocity coolant stream from a coolant supply system forming an integral part of a toolholder.

### SUMMARY AND OBJECTS OF THE INVENTION

The present invention is a toolholder according to claim 1.

Based on the foregoing, it is a primary object of the present invention to provide a toolholder having a fluid chip-breaking system for directing a stream of high velocity fluid at a chip removed from the workpiece to break the chip into small segments.

Another object of the present invention is to provide a toolholder of the type described above, wherein means are provided for adjusting the direction of the chip-breaking fluid stream.

Another object of the present invention is to provide a fluid, chip-breaking toolholder using a single orifice cap which can be easily and quickly adjusted without changing orifice caps.

Other objects and advantages of the present invention will become apparent and obvious from a study of the following description and the accompanying drawings which are merely illustrative of such invention.

### BRIEF DESCRIPTION OF THE DRAWINGS

Figure 1 is a perspective view of the toolholder of the present invention.

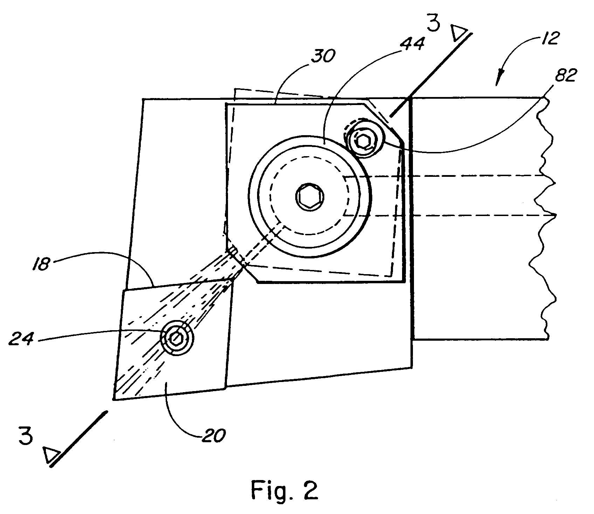

Figure 2 is a partial plan view of the toolholder.

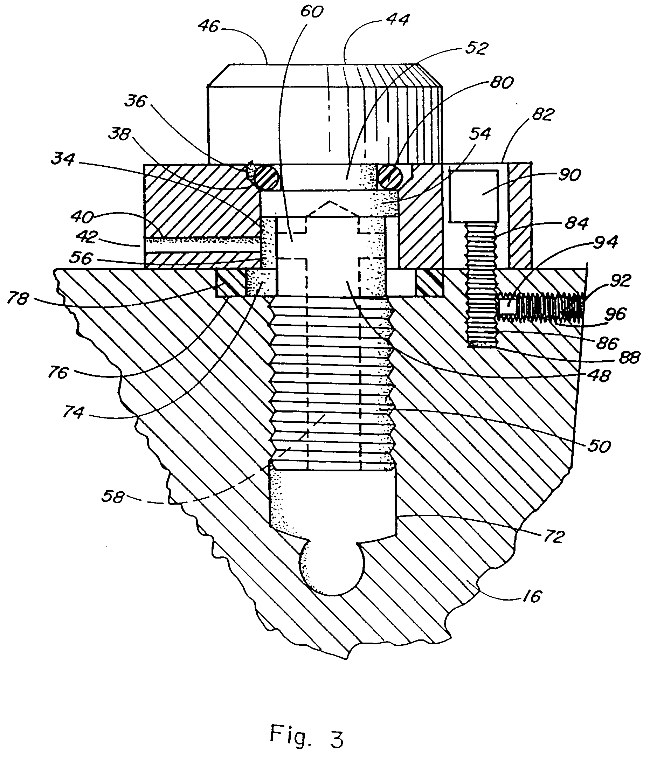

Figure 3 is a sectional view of the toolholder taken through line III-III of Figure 2.

Figure 4 is an exploded perspective view of the toolholder.

### DETAILED DESCRIPTION OF THE INVENTION

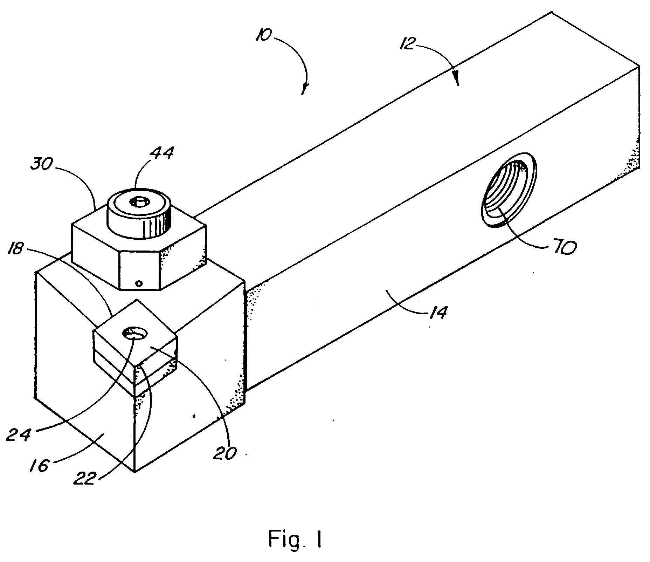

Referring now to the drawings, and particularly to Figure 1, the chip-breaking toolholder of the present invention is shown therein and indicated generally by the numeral 10. The toolholder 10 includes a support bar 12 having a shank portion 14 and a head portion 16. The head portion 16 of the toolholder 10 includes an insert seat 18 in which a cutting insert 20 is received. The cutting insert 20 is secured in the insert seat 18 by a lock pin 24. The cutting insert 20 includes a cutting edge 22 for engaging a workpiece and removing a chip of metal from the workpiece.

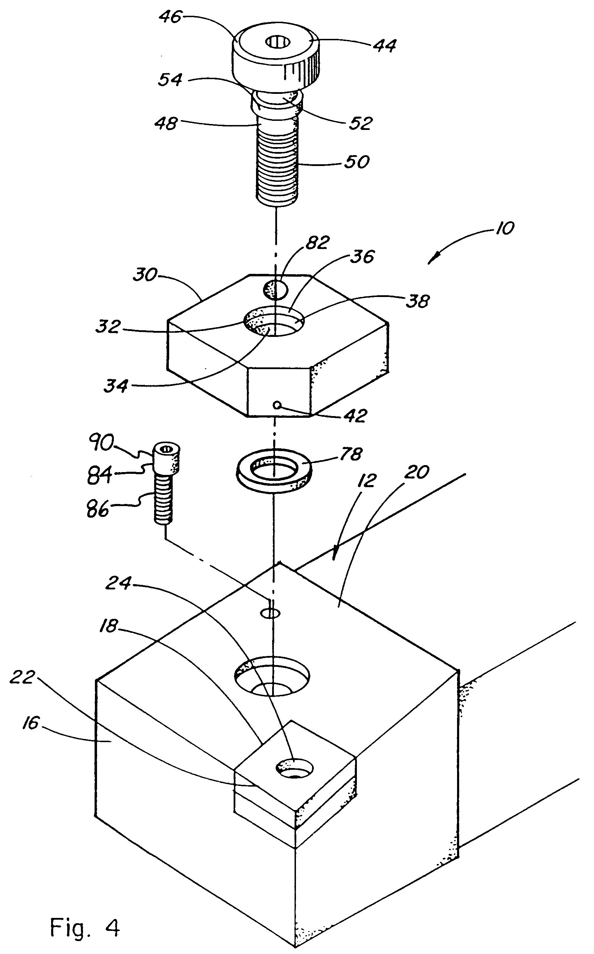

The toolholder includes a fluid chip-breaking system for breaking the chip removed from the workpiece into small segments. The fluid chip-breaking system includes an orifice cap 30 for directing a high velocity stream at the chip being removed from the workpiece, and a fluid inlet means for delivering chip-breaking fluid to the orifice cap 30. The orifice cap 30 is mounted on top of the head portion 16 of the support bar 12 and is held by a cap screw 44. An opening 32 (See Fig. 4) is formed in the orifice cap 30 through which an intermediate portion of the cap screw 44 extends. The opening 32 includes an upper portion 34 and a lower portion 36. The lower portion 36 of opening 32 is smaller than the upper portion 34. A conical surface 38 is formed between the upper and lower portions 34 and 36. A discharge passage 40 extends from the lower portion 36 of opening 32 to a forwardly directed surface of the orifice cap where it terminates in a discharge orifice 42.

The cap screw 44 includes a screw head 46, and a shank which comprises an intermediate portion 48 and a threaded end portion 50. The end portion 50 threadably engages with a cap screw hole 72 formed in the head portion 16 of the support bar 12. The cap screw hole 72 includes a counterbore 74 surrounding the cap screw hole 72 which defines a shoulder 76. An o-ring seal 78 is disposed in the counterbore 74. When the cap screw 44 is tightened, the o-ring seal 78 is compressed between the orifice cap 30 and the shoulder 76 to prevent fluid from escaping from underneath the orifice cap 30. A second o-ring seal 80 is disposed in an annular groove 52 between the head 46 of the cap screw 44 and annular ring 54. The seal 80 is compressed against the conical surface 38 to prevent fluid from escaping through the gap between the screw head 46 and the orifice cap 30.

The fluid inlet means for delivering chip-breaking fluid to the orifice cap 30 includes an inlet passage 70 which extends through the shank portion 14 of the support bar 12 into the head portion 16. The inlet passage 70 intersects the cap screw hole 72. Chip-breaking fluid passes from the inlet passage 70 through an access hole 58 formed in the cap screw 44. The access hole 58 extends from the end portion 50 of the cap screw 44 into the intermediate portion 48. A radial opening 60 passes diametrically through the intermediate portion 48 of the cap screw and intersects the access hole 58. An annular channel 56 is defined between the intermediate portion 48 of the cap screw and the inner surface of the opening 32. The annular channel 56 aligns with the discharge passage 40 in the orifice cap 30. Chip-breaking fluid exits the cap screw 44 through the radial hole 60, flows around the shank in the annular channel 56 defined between the intermediate portion of the shank and the inner surface of the opening 32. The fluid enters the discharge passage 40 in the orifice cap 30. In flowing from the access hole 58 through the discharge passage 40, the chip-breaking fluid accelerates and exits the discharge orifice 42 as a high velocity, fluid stream. The discharge orifice 42 directs the fluid stream just above the cutting edge of the insert 20 to break the chip being removed by the insert 20 into small segments.

An adjustment means is provided for adjusting the direction of the fluid stream exiting the orifice cap 30. Such adjustments may be necessary when making different cuts with the same tool. The adjustment means comprises a cam pin hole 82 formed in the orifice cap 30 in spaced relation to the axis of the cap screw 44. A cam pin 84 cooperates with the inner surface of the cam pin hole 82 to rotate the orifice cap 30 about the axis of the cap screw 44, which functions as a pivot member. More particularly, the cam pin 84 includes a shank portion 86 threadably engaged with a cam screw hole 88 formed in the head portion 16 of the support bar 12. The cam pin 84 includes an eccentric head 90 which is received in the cam pin hole 82 of the orifice cap 30. The eccentric head 90 of the cam pin 84 acts as a cam, while the inner surface of the cam pin hole 82 acts as a cam follower. Thus, when the cam pin 84 is rotated, it exerts a mechanical force on the orifice cap 30 causing the orifice cap 30 to rotate about the cap screw 44. To prevent the cam pin 84 from binding, the cam pin hole 82 must be elongated slightly along a line extending through the center of opening 32 to provide room for the cam pin 84 to move back and forth.

A locking means is provided for locking the cam pin 84 in a fixed position. In particular, a set screw hole 92 is formed in the head portion 16 of the toolholder 12 which intersects the cam screw hole 88. A set screw 96 forces a plug 94 made of brass or nylon against the shank 86 of the cam pin 84 to prevent the cam pin 84 from inadvertently rotating out of position. This would allow the orifice cap 30 to be replaced without having to readjust the new orifice cap 30.

To use the toolholder of the present invention, the cap screw 44 is slightly loosened to permit the orifice cap 30 to rotate about the cap screw 44. After loosening the cap screw 44, the cam pin 84 is turned to adjust the direction of the fluid chip-breaking stream. When properly adjusted, the cap screw 44 is retightened to secure the orifice cap 30 in the adjusted position. The toolholder is then used in a conventional manner to perform metal working operations.

From the forgoing, it is apparent that the present invention provides a fluid, chip-breaking toolholder in which the direction of the fluid stream can be easily and quickly adjusted. The toolholder of the present invention therefore eliminates the need for changing orifice caps to perform different metal working operations. Accordingly, significant savings in costs may be realized.

The present invention may, of course, be carried out in other specific ways than those herein set forth without parting from the spirit and essential characteristics of the invention. The present embodiments are, therefore, to be considered in all respects as illustrative and not restrictive, and all changes coming within the meaning and equivalency range of the appended Claims are intended to be embraced therein.

## Claims

1. A toolholder (10) having a support bar (12) with an insert seat (18) for receiving a cutting insert (20), said insert (20) including a cutting edge (22) for engaging a workpiece and removing a chip therefrom and having fluid chip-breaking means for directing a high velocity, fluid stream at the chip being removed from the workpiece to break the chip into small segments, wherein chip breaking means includes an orifice cap (30) mounted on the support bar (12) and the orifice cap (30) includes a discharge orifice (42) for directing the fluid stream characterised by:
a) adjusting means for adjusting the direction of the fluid stream, wherein said adjusting means includes a pivot member (44) having an axis therethrough about which the orifice cap (30) rotates and includes means (82,90) for rotating the orifice cap about the pivot member (44), said means for rotating being in spaced relation to said pivot member (44) axis; and
b) wherein the pivot member (44) has threads matable with complimentary threads in the support bar (12) to compress the orifice cap (30) against the support bar (12) sufficient to provide a fluid seal such that the orifice cap (30) may be rotated to a preferred rotational position at the same time fluid is expelled from the orifice cap (30).

2. The toolholder (10) according to claim 1 wherein the chip-breaking means includes fluid inlet means (70) for supplying chip-breaking fluid to the orifice cap.

3. The toolholder (10) according to claim 2 wherein the fluid inlet means (70) includes an inlet passage (70) extending through the support bar (12).

4. The toolholder (10) according to claim 3 wherein the fluid inlet means (70) includes transfer means for transferring fluid from the inlet passage in the support bar (12) to the orifice cap (30).

5. The toolholder (10) according to claim 1 wherein the rotating means includes a cam member (84) connected to the support bar (12) and a cam follower (82) formed on the orifice cap (30) and engaged with the cam member (84).

## Patentansprüche

1. Werkzeughalter (10) mit einem Trägerstab (12), der einen Einsatzsitz (18) zur Aufnahme eines Schneideinsatzes (20) enthält, wobei der Einsatz (20) eine Schneidkante (22) aufweist, die am Werkstück angreift und von diesem einen Span entfernt, sowie einem Fluid-Spanbrechmittel, das auf den vom Werkstück entfernten Span einen Hochgeschwindigkeits-Fluidstrahl richtet, um den Span in kleine Segmente zu brechen, wobei das Spanbrechmittel eine eine Öffnung aufweisende Kappe (30) enthält, die auf dem Trägerstab (12) befestigt ist und eine Auslaßöffnung (42) zum Richten des Fluidstrahls enthält,
gekennzeichnet durch:
a) ein Einstellmittel zum Einstellen der Richtung des Fluidstrahls, wobei das Einstellmittel ein Drehpunktelement (44) enthält, das eine durch es hindurchverlaufende Achse aufweist, um welche sich die eine Öffnung aufweisende Kappe (30) dreht, sowie ein Mittel (82, 90) zum Drehen der eine Öffnung aufweisenden Kappe um das Drehpunktelement (44), wobei das Mittel zum Drehen von der Achse des Drehpunktelementes (44) beabstandet ist, und
b) wobei das Drehpunktelement (44) Gewindegänge aufweist, die mit komplementären Gewindegängen in dem Trägerstab (12) in Eingriff gebracht werden können, um die eine Öffnung aufweisende Kappe (30) ausreichend gegen den Trägerstab (12) zu pressen, so daß eine Fluiddichtung derart ausgebildet ist, daß die eine Öffnung aufweisende Kappe (30) in eine bevorzugte Drehausrichtung gedreht werden kann, während gleichzeitig Fluid aus der eine Öffnung aufweisenden Kappe (30) ausgestoßen wird.

2. Werkzeughalter (10) nach Anspruch 1, bei dem das Spanbrechmittel ein Fluideinlaßmittel (70) zur Zufuhr von Spanbrechfluid zu der eine Öffnung aufweisenden Kappe enthält.

3. Werkzeughalter (10) nach Anspruch 2, bei dem das Fluideinlaßmittel (70) einen Einlaßdurchgang (70) enthält, der sich durch den Trägerstab (12) erstreckt.

4. Werkzeughalter (10) nach Anspruch 3, bei dem das Fluideinlaßmittel (70) ein Übertragungsmittel enthält, das Fluid von dem Einlaßdurchgang im Trägerstab (12) zu der eine Öffnung aufweisenden Kappe (30) leitet.

5. Werkzeughalter (10) nach Anspruch 1, bei dem das Drehmittel ein mit dem Trägerstab (12) verbundenes Nockenelement (84) und ein Nockennachfolgeelement (82) enthält, das auf der eine Öffnung aufweisenden Kappe (30) gebildet ist und am Nockenelement (84) angreift.

## Revendications

1. Porte-outil (10), présentant une barre de support (12) munie d'un siège de plaquette (18) destiné à recevoir une plaquette de coupe (20), ladite plaquette (20) comprenant un bord de coupe (22) destiné à venir au contact d'une pièce travaillée et à en retirer un copeau, et présentant un moyen brise-copeaux hydraulique destiné à diriger un jet de fluide à grande vitesse vers le copeau retiré de la pièce travaillée afin de casser ce copeau en petits segments, dans lequel le moyen brise-copeaux comprend un chapeau d'orifice (30) fixé sur la barre de support (12), et le chapeau d'orifice (30) comprend un orifice de sortie (42) destiné à diriger le jet de fluide, caractérisé par:
a) un moyen de réglage pour ajuster la direction du jet de fluide, dans lequel ledit moyen de réglage comprend un élément de pivotement (44) traversé par un axe autour duquel tourne le chapeau d'orifice (30), et comprend un moyen (82, 90) pour faire tourner le chapeau d'orifice (30) autour de l'élément de pivotement (44), ledit moyen de rotation étant espacé de l'axe dudit élément de pivotement (44); et
b) dans lequel l'élément de pivotement (44) présente un filetage qui correspond à un taraudage complémentaire dans la barre de support (12), afin de comprimer le chapeau d'orifice (30) contre la barre de support (12) de manière suffisante pour former un joint étanche au fluide, de sorte qu'on peut faire tourner le chapeau d'orifice (30) jusqu'à une position angulaire préférée pendant que le fluide est expulsé hors du chapeauu d'orifice (30).

2. Porte-outil (10) selon la revendication 1, dans lequel le moyen brise-copeaux comprend un moyen d'entrée de fluide (70) destiné à amener un fluide brise-copeaux jusqu'au chapeau d'orifice.

3. Porte-outil (10) selon la revendication 2, dans lequel le moyen d'entrée de fluide (70) comprend un passage d'entrée (70) qui s'étend à travers la barre de support (12).

4. Porte-outil (10) selon la revendication 3, dans lequel le moyen d'entrée de fluide (70) comprend un moyen de transfert pour transférer le fluide du passage d'entrée de la barre de support (12) au chapeau d'orifice (30).

5. Porte-outil (10) selon la revendication 1, dans lequel le moyen de rotation comprend un élément de came (84) raccordé à la barre de support (12) et une surface commandée (82) formée sur le chapeau d'orifice (30) et mise en prise par l'élément de came (84).
